# EUROPÄISCHE PATENTSCHRIFT

(11) **EP 3 350 427 B1**
(45) Veröffentlichungstag und Bekanntmachung des Hinweises auf die Patenterteilung: **11.09.2019**
(21) Anmeldenummer: 16742233.6
(22) Anmeldetag: 18.07.2016
(51) Int. Cl.: F01N 3/20, F01N 3/28, F24H 1/00, F24H 1/20, H05B 3/04, H05B 3/44

(54) **VERSORGUNGSMODUL MIT HEIZEINRICHTUNG ZUR FÖRDERUNG EINES GEFRIERFÄHIGEN BETRIEBS-/HILFSSTOFFES**
DELIVERY MODULE WITH HEATING DEVICE FOR EXTRACTING A FREEZABLE REDUCTANT LIQUID
MODULE DE DISTRIBUTION AVEC ELEMENT DE CHAUFFAGE POUR L'EXTRACTION D'UN LIQUIDE REDUCTEUR SUSCEPTIBLE DE GELER

(30) Priorität: 18.09.2015 DE 102015217931
(43) Veröffentlichungstag der Anmeldung: 25.07.2018
(73) Patentinhaber: Robert Bosch GmbH, 70442 Stuttgart (DE)
(72) Erfinder: KIONTKE, Martin, 71254 Ditzingen (DE); DOEFFINGER, Andreas, 71229 Leonberg (DE)
(86) Internationale Anmeldenummer: PCT/EP2016/067027
(87) Internationale Veröffentlichungsnummer: WO 2017/045807

(56) Entgegenhaltungen:
- WO-A1-2008/138757
- DE-A1-102013 217 927

## Beschreibung

### Technisches Gebiet

Die vorliegende Erfindung bezieht sich auf eine Vorrichtung zum Beheizen eines Betriebs-/Hilfsstoffes für eine Verbrennungskraftmaschine, wobei es sich bei dem Betriebs-/Hilfsstoff insbesondere um eine gefrierfähiges Reduktionsmittel zur Reduzierung von Schadstoffen im Abgas der Verbrennungskraftmaschine handelt.

### Stand der Technik

DE 10 2013 217 333 A1 betrifft einen Im-Tank-Filter und einen für diesen geeignetes Filtermedium. Der Im-Tank-Filter dient der Filterung einer Flüssigkeit und weist eine erste Filterseite und eine zweite Filterseite auf. Zwischen diesen ist ein Aufnahmeraum angeordnet, ferner ist über einen Anschluss gefilterte Flüssigkeit aus dem Aufnahmeraum ableitbar. Zum Bilden eines Gehäuses ist eine ringförmige Umfangswand vorgesehen, welche die erste Filterseite und die zweite Filterseite umschließt, wobei zumindest eine Filterseite ein plissiertes Filtermedium aufweist.

DE 10 2013 222 288 A1 bezieht sich auf ein Versorgungsmodul zur Förderung eines Betriebs-/Hilfsstoffes. Ein Versorgungsmodul zur Förderung eines Betriebs-/Hilfsstoffes, insbesondere eines gefrierfähigen Reduktionsmittels für ein Abgasnachbehandlungssystem umfasst ein Trägerteil, an dem ein Förderaggregat und ein Filter aufgenommen sind. Das Filter stellt eine Halterung für eine dieses im Wesentlichen umschließende Heizung dar. Der Filterkörper des Filters umfasst eine erste und eine zweite Gehäusehälfte. Die Heizung wird durch eine Anzahl von Heizdrahtwindungen gebildet. Das Filter ist auf eine Aufsatzfläche eines topfförmig ausgebildeten Trägerteiles positioniert. Das Filter des Versorgungsmodules hat die Aufgabe, Urschmutz sowie den zusätzlich während der Nachtankvorgänge in den Tank eingebrachten Schmutz zu filtern, um sensible Bauteile, beispielsweise das Förderaggregat sowie das den Betriebs-/Hilfsstoff in den Abgastrakt eindosierende Dosiermodul zu schützen. Die Hauptschmutzbeladung über die Lebensdauer des Filters gesehen, entsteht durch den eingebrachten Schmutz beim Nachtanken (zumindest 75 %). Da das Filter für die Lebensdauer des Versorgungsmoduls ausgelegt werden soll, muss dessen Kapazität entsprechend hoch sein, um diese Anforderung zu erfüllen. Dadurch und durch den nur begrenzt zur Verfügung stehenden Bauraum bedingt, ergibt sich ein relativ hoher Filteraufbau. Um das Filter gemäß DE 10 2013 222 288 A1 ist ein Widerstandsheizer in Gestalt eines Heizdrahtes mit konstantem Querschnitt gewickelt, der die Aufgabe hat, in gefrorenem Zustand im Filterinneren eingeschlossenes Reduktionsmedium einerseits sowie das das Filterumgebende Tankvolumen andererseits aufzutauen. Um Bauteile und Kosten zu sparen sowie eine effiziente Heizleistung sicherzustellen, wird in der Lösung gemäß DE 10 2013 222 288 A1 der Stützkörper für die Heizdrahtwindungen der Widerstandsheizung der Filterkörper des Filters genutzt. Durch die beschriebenen Anforderungen an das Filter und an den Heizdraht, der auslegungsbedingt eine Länge von mehr als 3 m aufweist, ergeben sich Betriebszustände für die Filterheizungskombination in Abhängigkeit vom Füllstand des Betriebs-/Hilfsstoffes im Vorratstank. Bei dem Betriebsstoff-/Hilfsstoff handelt es sich insbesondere um ein gefrierfähiges Reduktionsmittel, beispielsweise Harnstoff oder eine Harnstoff-Wasser-Lösung, die bei Außentemperaturen von unter -11°C gefriert.

Im Falle einer nur teilweisen oder gar keiner Flüssigkeitsbedeckung des Filters und der Heizung mit dem gefrierfähigen Reduktionsmittel im Vorratstank, kommt es zu einer starken Temperaturerhöhung in freiliegenden Heizdrahtbereichen. Die Ursache dafür ist eine zu hohe lokale Energieabgabe, die nicht an die Umgebung abgegeben werden kann. Um Bauteilbeschädigungen des Filters sowie des Trägerteiles durch unzulässig hohe Temperaturen zu vermeiden, wird bei der Lösung gemäß DE 10 2013 222 288 A1 die Heizleistung durch ein Steuergerät vermindert. Die damit verbundene Reduzierung der Heizleistung führt jedoch zu einer Verschlechterung des Auftauverhaltens.

DE 10 2014 211 251 (& EP 3 155 242 A0 Stand der Technik nach Artikel 54(3) EPÜ) bezieht sich auf ein Versorgungsmodul zur Förderung eines Betriebs-/Hilfsstoffes eines Abgasnachbehandlungssystems mit einem Trägerkörper, an dem ein Förderaggregat und ein Filter aufgenommen sind. Auf dem Trägerkörper ist ein topfförmiges Heizelement angeordnet, welches ein Reservoir für den Betriebs-/Hilfsstoff bildet. Das topfförmige Heizelement weist eine Topfwand auf, die als Edelstahlband oder als Stahlband ausgebildet ist.

DE 10 2013 217 927 A1 bezieht sich auf eine Zwischen-Plattform zur Aufnahme einer Tankeinbaueinheit an einem Tank. In einem, einen Betriebs-/Hilfsstoff bevorratenden Tank ist an einer Zwischen-Plattform eine als Schwappschutz dienende Fluidbarriere ausgebildet. Die Zwischen-Plattform weist an ihrer Oberseite und/oder Unterseite elektrische Anschlusskomponenten bzw. Schnittstellen und/oder hydraulische Schnittstellen und/oder Befestigungselemente und/oder Einbauräume auf, sowie eine erste Abdicht-/Befestigungsfläche bzw. Verbindungsschnittstelle für die Tankeinbaueinheit sowie eine zweite Abdicht-/Befestigungsfläche bzw. Verbindungsschnittstelle für einen Tankboden des Vorhangstankes.

Heizvorrichtungen zur Beheizung eines einen gefrierfähigen Betriebs-/Hilfsstoff aufnehmenden Tanks können eine Zusatzheizung umfassen. Die Zusatzheizung kann beispielsweise als ein spiralförmig gewickelter Heizdraht ausgebildet sein, der an einer separaten, an einem Heizmodul ausgebildeten Steckerschnittstelle elektrisch angeschlossen ist. Da sich das Heizmodul zur Beheizung des den gefrierfähigen Betriebs-/Hilfsstoffes im Tank für diesen befindet, ist eine Abdichtung der elektrischen Kontaktierung gegen das in diesem Tank bevorratete Reduktionsmedium erforderlich. Dazu sind eine Anzahl von Abdicht- und Befestigungselementen erforderlich, die einerseits eine erhebliche Anzahl kleiner Zusatzbauteile bedingen, andererseits mit einer erheblichen Anzahl von Montageschritten einhergehen. Daneben stellen die verbauten Zusatzteile beispielsweise Dichtringe, Elastomerbauteile sowie weitere Kleinteile potentielle Schwachstellen dar, bei deren Versagen im Betrieb möglicherweise Reduktionsmittel an kritische Baugruppenstellen gelangt.

### Darstellung der Erfindung

Erfindungsgemäß wird diese Aufgabe durch ein Versorgungsmodul nach Anspruch 1 zur Förderung eines gefrierfähigen Betriebs-/Hilfsstoffes zur Abgasnachbehandlung einer Verbrennungskraftmaschine und zur Beheizung eines den gefrierfähigen Betriebs-/Hilfsstoff aufnehmenden Vorratstanks mit einer Hauptheizung und einer Zusatzheizung, die an einem Trägerkörper elektrisch kontaktiert sind, gelöst, wobei eine Topfwand eines Heiztopfes sowohl elektrische Kontakte der Hauptheizung als auch elektrische Kontakte der Zusatzheizung umfasst.

In weiterer Ausgestaltung der der Erfindung zugrundeliegenden Lösung sind die elektrischen Kontakte in einer Einbuchtung der Topfwand an deren Umfang eingebracht, so dass diese nicht über den Außenumfang der ringförmig verlaufenden Topfwand des Heiztopfes überstehen.

In einer weiteren bevorzugten Ausführungsvariante des erfindungsgemäß vorgeschlagenen Versorgungsmodules sind die elektrischen Kontakte der Hauptheizung an der dem Trägerkörper des Versorgungsmoduls zugewandten Seite kontaktierbar ausgebildet. Die elektrischen Kontakte für die Zusatzheizung, die sich ebenfalls an der Topfwand befinden, sind beidseits kontaktierbar, dies bedeutet, vom unteren Rand der Topfwand als auch vom oberen Rand der Topfwand innerhalb der Einbuchtung kontaktierbar.

In weiterer Ausgestaltung der erfindungsgemäß vorgeschlagenen Lösung sind die elektrischen Kontakte der Zusatzheizung durch das Material des Heiztopfes geführt und ragen innerhalb der Einbuchtung an der Topfwand in einen Kontaktbereich hinein. Dadurch ist eine leichte Herstellung einer elektrischen Verbindung zwischen den elektrischen Kontakten der Zusatzheizung und einem Gegenstecker von der Oberseite des Heiztopfes her möglich, wobei der entstehende Kontaktbereich innerhalb der Einbuchtung der Topfwand des Heiztopfes des Versorgungsmoduls liegt.

In weiterer Ausgestaltung der erfindungsgemäß vorgeschlagenen Lösung sind die elektrischen Kontakte elastomerfrei abgedichtet. Die Abdichtung der elektrischen Kontakte erfolgt durch Ausbildung einer stoffschlüssigen Fügestelle zwischen dem Trägerkörper des Versorgungsmoduls einerseits und dem Heiztopf andererseits. Die Abdichtung der elektrischen Kontakte der Zusatzheizung durch eine stoffschlüssige Fügestelle erfolgt durch Ausbildung derselben zwischen dem Heiztopf und einer Kunststoff-Isolierung des Zusatzheizers. Die stoffschlüssige Fügestelle wird insbesondere durch Kunststoffverschweißung hergestellt, so dass auf die bisher erforderlichen O-Ringe aus Elastomermaterial Stützscheiben und andere Kleinteile, die beschädigungsanfällig sind, verzichtet werden kann.

In vorteilhafter Weise ist das erfindungsgemäß vorgeschlagene Versorgungsmodul am Heiztopf innerhalb der Topfwand mit einem in Mäanderform verlaufenden Heizelement versehen. Wird das in Mäanderform verlaufende Heizelement der Hauptheizung als Stanzgitter ausgeführt ist dies günstig, um unterschiedliche Temperaturausdehnungen des Stanzgitters und dessen Kunststoffisolierung zu kompensieren. Verläuft die beispielsweise als Stanzgitter ausgebildete Hauptheizung vertikal, verlaufen die längsten Teilstücke des Stanzgitters demnach in vertikale Richtung, wird eine bei Temperaturänderung einsetzende Dehnung einen Ziehharmonikaeffekt des Stanzgitters in Richtung der größten Temperaturausdehnung des Kunststoffmaterials bewirken. In diesem Falle sind die entstehenden Spannungen auf die Kunststoffumspritzung entsprechend gering und liegen insbesondere unterhalb zulässiger maximaler Spannungswerte. Dieses in Mäanderform verlaufende Heizelement kann als Stanzgitter oder in Form eines Heizdrahtes, oder auch als Folie beschaffen sein.

Bei den in vorteilhafter Weise einsetzbaren Heizelementen für die Hauptheizung kann es sich sowohl um umlaufende Heizelemente, wie beispielsweise eben jenes Stanzgitter handeln, als auch um Heizdrähte, eine Heizmatte bzw. die bereits erwähnte Heizfolie; des Weiteren besteht die Möglichkeit, eine Wasserheizung in das Kunststoffmaterial einzubetten. In diesem Falle wird das Stanzgitter durch einen Kanal ersetzt, der mit einem Flüssigkeitskreislauf verbunden ist.

Anstelle der umlaufenden Heizelemente für die Hauptheizung können lokal positionierte Heizelemente mit einem zusätzlichen Wärmeleitkörper, der in bevorzugter Weise ein metallisches Material umfasst, eingesetzt werden. Bei den lokal positionierbaren Heizelemente kann es sich um einen Heizwiderstand oder um ein oder mehrere PTC-Elemente handeln, um Beispiele zu nennen.

In Bezug auf die umlaufend ausgebildeten Heizelemente für die Hauptheizung ist anzumerken, dass diese ebenfalls einen Wärmeleitkörper aufweisen können. Dies wird insbesondere dann der Fall sein, wenn die Kunststoffisolierung des umlaufenden Heizelementes eine sehr geringe Wärmeleitfähigkeit aufweist. Daher werden höher wärmeleitfähige, jedoch elektrisch isolierende Kunststoffe eingesetzt. Es besteht des Weiteren die Möglichkeit, dem Kunststoffmaterial geeignete Füllstoffe, so zum Beispiel Mineralstoffe und/oder Keramik beizumischen, um die Wärmeleitfähigkeit des Kunststoffmaterials zu beeinflussen. Es besteht alternativ auch die Möglichkeit, metallische Wärmeleitkörper einzusetzen, wodurch eine optimale Wärmeleitung innerhalb des Heizelementes gewährleistet wird, wobei die resultierende Heizleistung optimiert wird.

Das erfindungsgemäß vorgeschlagene Versorgungsmodul wird insbesondere in einem Abgasnachbehandlungssystem einer Verbrennungskraftmaschine, insbesondere einer selbstzündenden Verbrennungskraftmaschine eingesetzt.

### Vorteile der Erfindung

Die erfindungsgemäß vorgeschlagene Lösung zeichnet sich dadurch aus, dass sowohl die Hauptheizung als auch die Zusatzheizung des Versorgungsmodules mit einer einheitlich ausgebildeten Steckerschnittstelle für beide Heizungen ausgeführt ist. Die im Bereich der Topfwand liegenden elektrischen Kontakte erlauben den Entfall von Elastomerdichtungen, wodurch die Robustheit des erfindungsgemäß vorgeschlagenen Versorgungsmodules erheblich gesteigert wird. Aufgrund des umgesetzten vereinfachten Abdichtungs- und Befestigungskonzeptes ohne Kleinteile wie Beispielsweise O-Ringe aus Elastomer kann eine erhebliche Bauteilreduzierung erreicht werden. Es besteht die Möglichkeit, an der einheitlich ausgebildeten Steckerschnittstelle der elektrischen Kontakte für die Hauptheizung und die Zusatzheizung flexible Montagekonzepte umzusetzen, so dass die Hauptheizung bzw. die Zusatzheizung von externen Zulieferern montiert werden können oder auch beim Hersteller des Versorgungsmoduls eine Montage erfolgen kann. Diese Montage ist aufgrund der reduzierten Montageschritte erheblich vereinfacht, wodurch eine Kostenreduzierung erreicht werden kann.

Die Montage, insbesondere der Zusatzheizung, kann herstellerseitig nach Fertigung des Versorgungsmodules in der Produktion erfolgen, so dass ein aufwendiges Durchschleusen der Zusatzheizung durch einen jeden Fertigungsschritt des Versorgungsmodules entfallen kann. Die Montage der Zusatzheizung kann auch beim Endabnehmer entweder dem Hersteller des Vorratstanks zur Aufnahme des Betriebs-/Hilfsstoffes oder dem OEM erfolgen. Innerhalb des Kontaktbereiches an der Topfwand des Heiztopfes des Versorgungsmodules könnte auch eine Zusatzheizung eines anderen Herstellers angeschlossen werden, so dass die Steuerung der Zusatzheizung über das in das Versorgungsmodul integrierte Steuergerät übernommen werden könnte.

Bei dem erfindungsgemäß vorgeschlagenen Heizkonzept, die Hauptheizung und die Zusatzheizung umfassend, kann in Bezug auf die Hauptheizung eine topfförmige Heizung verwirklicht werden, die zudem einen Reservoireffekt aufweist, da im innenliegenden Hohlraum des Heiztopfes ein Vorrat des gefrierfähigen Reduktionsmittels beheizt und demnach bei niedrigen Außentemperaturen flüssig gehalten werden kann. Der Einsatz eines mäanderförmig ausgebildeten Stanzgitters ermöglicht eine Temperaturdehnungskompensation in Zusammenwirkung mit der wärmeleitenden Umspritzung des Kunststoffmaterials. Durch die erfindungsgemäß vorgeschlagene Lösung lässt sich eine integrierte Standardschnittstelle, insbesondere zur elektrischen Kontaktierung der Zusatzheizung darstellen.

In Bezug auf die Zusatzheizung wird durch die erfindungsgemäß vorgeschlagene Lösung eine standardisierte Schnittstelle für eine einfache elektrische Kontaktierung und Befestigung von Zusatzheizungen, seien es Eigenheizungen, seien es Fremdheizungen, geschaffen. Die erfindungsgemäß vorgeschlagene Lösung ermöglicht die Implementierung eines flexiblen Fertigungskonzeptes, wonach bei einer nicht benötigten Zusatzheizung am Versorgungsmodul offene Pinenden mit einer Abdeckkappe flüssigkeitsdicht verschlossen werden können. Die Ausbildung der Abdichtung als stoffschlüssige Verbindung erfolgt beispielsweise durch Heizelementschweißen. Es lässt sich eine erhebliche Robustheitssteigerung dadurch erreichen, dass Kleinteile und Weichstoffdichtungen beim erfindungsgemäß vorgeschlagenen Heizkonzept entfallen können und durch die Steuerung durch ein gemeinsames Steuergerät Heizstrategien umgesetzt werden können, bei denen eine Gesamtheitsleistung zwischen der Hauptheizung und der gegebenenfalls vorhandenen Zusatzheizung flexibel aufgeteilt werden kann. Dies erfolgt in Abhängigkeit des jeweiligen Zustandes des Gesamtsystems.

### Kurze Beschreibung der Zeichnungen

Anhand der Zeichnung wird die Erfindung nachstehend eingehender beschrieben.

Es zeigt:
- Figur 1: ein Versorgungsmodul,
- Figur 2: eine Detaildarstellung einer Steckerschnittstelle zur elektrischen Kontaktierung einer Zusatzheizung,
- Figur 3: ein Ausführungsbeispiel einer erfindungsgemäß vorgeschlagenen Topfwand eines Heiztopfes eines Versorgungsmodules,
- Figur 4: eine Darstellung einer Fügestelle zwischen dem Heiztopf und dem Trägerkörper des Versorgungsmoduls, und
- Figur 4.1: eine Detaildarstellung einer elektrischen Kontaktierungsschnittstelle für die Zusatzheizung und
- Figur 5: ein in eine Topfwand eingebettetes Heizelement.

### Ausführungsformen der Erfindung

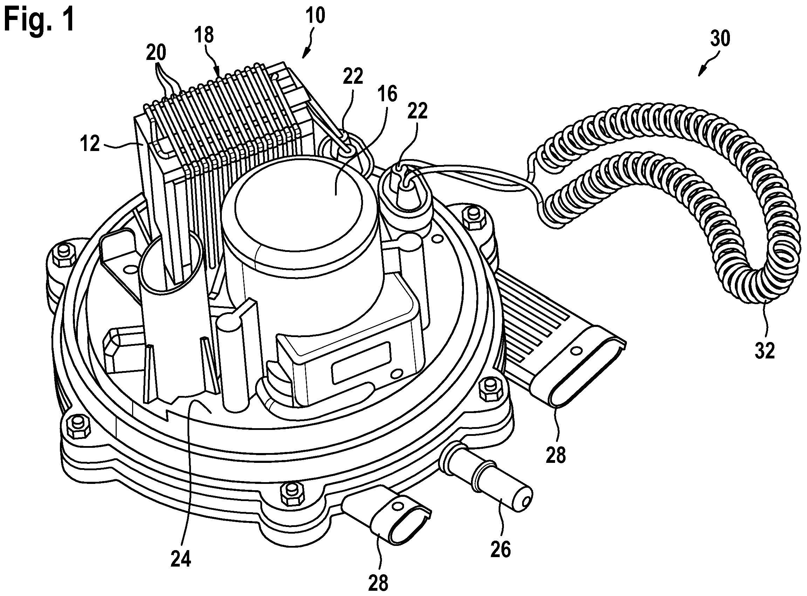

Figur 1 zeigt ein Versorgungsmodul gemäß des Standes der Technik.

Ein Versorgungsmodul 10 umfasst ein Filter 12 sowie ein Förderaggregat 16. Das Filter 12 ist von einer Hauptheizung 18 umgeben, die im Ausführungsbeispiel gemäß Figur 1 mehrere Heizdrahtwindungen 20 umfasst. Auf der Oberseite des Versorgungsmoduls 10 befinden sich elektrische Anschlüsse 22 zur elektrischen Kontaktierung der Hauptheizung 18 als auch einer Zusatzheizung 30. Das Versorgungsmodul 10 gemäß Darstellung in Figur 1 umfasst des Weiteren einen Trägerkörper 24, an dem sowohl ein hydraulischer Anschluss 26 für den Betriebs-/Hilfsstoff, insbesondere ein gefrierfähiges Reduktionsmittel ausgebildet sind, als auch Anschlussstecker 28 zur elektrischen Kontaktierung des Trägerkörpers 24 des Versorgungsmoduls 10.

An einem der elektrischen Anschlüsse 22 ist die Zusatzheizung 30 angeschlossen, die im Ausführungsbeispiel gemäß Figur 1 als spiralförmig gewickelter Heizdraht 32 ausgebildet ist.

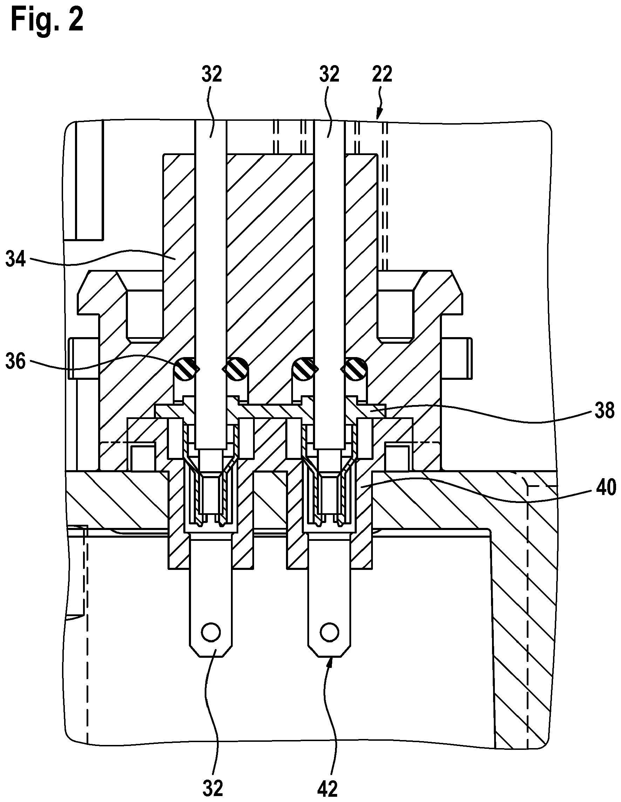

Figur 2 zeigt ein Detail eines elektrischen Anschlusses 22, wie er in Figur 1 schematisch dargestellt ist.

Aus der Darstellung gemäß Figur 2 geht hervor, dass der Heizdraht 32 in eine Hülse 34 gesteckt ist. Die Enden des Heizdrahtes 32 sind mit O-Ringen 36 aus Elastomermaterial versehen, welche Terminals 42, die im Trägerkörper 24 ausgebildet sind, gegen das Reduktionsmittel abdichten. Darüber hinaus sind die Enden des Heizdrahtes 32 der Zusatzheizung 30 von einer Scheibe 38 umgeben, ferner von einem Stützkörper 40, welcher zur Bauteilaufnahme und Drehlagerausrichtung der Kontaktierungsenden des Heizdrahtes 32 dient. Die Scheibe 38 dient der Zugentlastung, während die O-Ringe aus Elastomer 36 insbesondere als Abdichtung gegen den aggressive Eigenschaften aufweisenden Betriebs-/Hilfsstoff dienen. Aus der Darstellung gemäß Figur 2 ergibt sich, dass die elektrischen Anschlüsse 22 gemäß des Standes der Technik eine Vielzahl von zusätzlichen Bauteilen aufweisen, welche im Hinblick auf die Lebensdauer des Versorgungsmodules 10 Schwachstellen aufgrund nachlassender Dichteigenschaften darstellen.

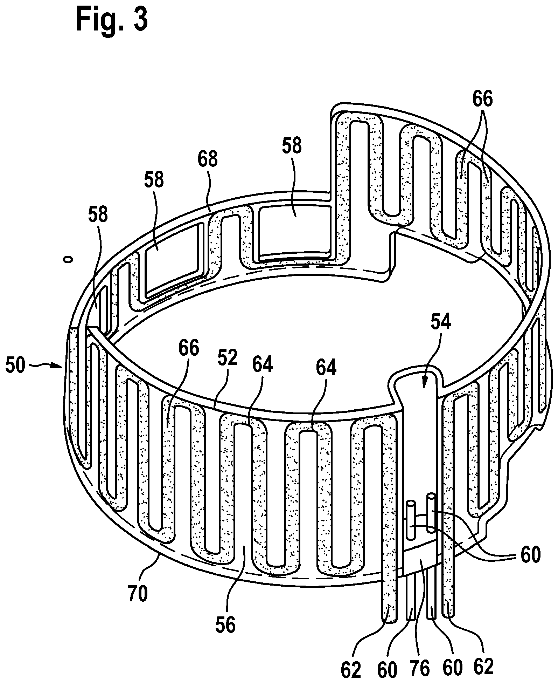

Der Darstellung gemäß Figur 3 ist eine Ausführungsvariante des erfindungsgemäß vorgeschlagenen Versorgungsmoduls zu entnehmen.

Wie der perspektivischen Darstellung gemäß Figur 3 entnommen werden kann, umfasst ein Heiztopf 50 eine ringförmig ausgebildete Topfwand 52. Am Umfang der Topfwand 52 ist eine Einbuchtung 54 ausgebildet. Die Einbuchtung 54 ist im Wandmaterial 56 der Topfwand 52 ausgeführt, und erstreckt sich in radiale Richtung gesehen nach innen. Wie aus der perspektivischen Darstellung gemäß Figur 3 hervorgeht, kann die Topfwand 52 bzw. deren Wandmaterial 56 mit einer Anzahl von Durchbrüchen 58 versehen werden, die ein fensterförmiges Aussehen haben können oder auch bullaugenförmig ausgestaltet sein können. Die Durchbrüche 58 können hinsichtlich ihrer Größe und ihrer Form frei gestaltet werden, oder so ausgelegt sein, dass das Auftauverhalten positiv beeinflusst werden kann, wobei insbesondere ein entsprechender Medienaustausch durch diese Durchbrüche 58 eingestellt werden kann.

Figur 3 zeigt des Weiteren, dass die Topfwand 52 einen ersten Rand 68 aufweist, sowie einen diesem gegenüberliegenden zweiten Rand 70. An der Unterseite der Topfwand 52 des Heiztopfes 50 vom zweiten Rand 70 wegweisend, erstrecken sich sowohl elektrische Kontakte 60 zur elektrischen Kontaktierung der Zusatzheizung 30 als auch elektrische Kontakte 62 zur Kontaktierung der Hauptheizung 18 des Versorgungsmoduls 10. Aus der Darstellung gemäß Figur 3 ergibt sich darüber hinaus, dass die elektrischen Kontakte 62 der Hauptheizung 18 von der Unterseite, d.h. von der dem Trägerkörper 24 zuweisenden Seite der Topfwand 52 kontaktierbar sind, während die in einem Kontaktbereich 78 an einer Kunststoff-Isolierung liegenden elektrischen Kontakte 62 sowohl von der Oberseite, d.h. aus Richtung des ersten Randes 68 der Topfwand 52 kontaktierbar sind, als auch von der Unterseite her. Aus der perspektivischen Darstellung in Figur 3 ist erkennbar, dass die oberen Enden der elektrischen Kontakte 60 der Zusatzheizung 30 innerhalb der Einbuchtung 54 einen Kontaktbereich 78 darstellend, münden. Damit besteht die Möglichkeit, die elektrischen Kontakte 60 der Zusatzheizung 30 von der Oberseite bei vollständiger Montage des erfindungsgemäß vorgeschlagenen Versorgungsmoduls 10 zu kontaktieren.

In der Darstellung gemäß Figur 3 ist ein Heizelement 66 in das Wandmaterial 56 der Topfwand 52 des Heiztopfes 50 eingelassen. Das Heizelement 66 erstreckt sich in Form eines Mäanders 64 durch das Wandmaterial 56 der Topfwand 52. Das Heizelement 66 kann als Stanzgitter ausgeführt sein oder in Form eines oder mehrerer Heizdrähte, die ebenfalls in Form eines Mäanders 64 im Wandmaterial 56 der Topfwand 52 verlaufen können. Darüber hinaus besteht die Möglichkeit, das Heizelement 66 gemäß der Darstellung in Figur 3 auch als Folie oder dergleichen auszuführen.

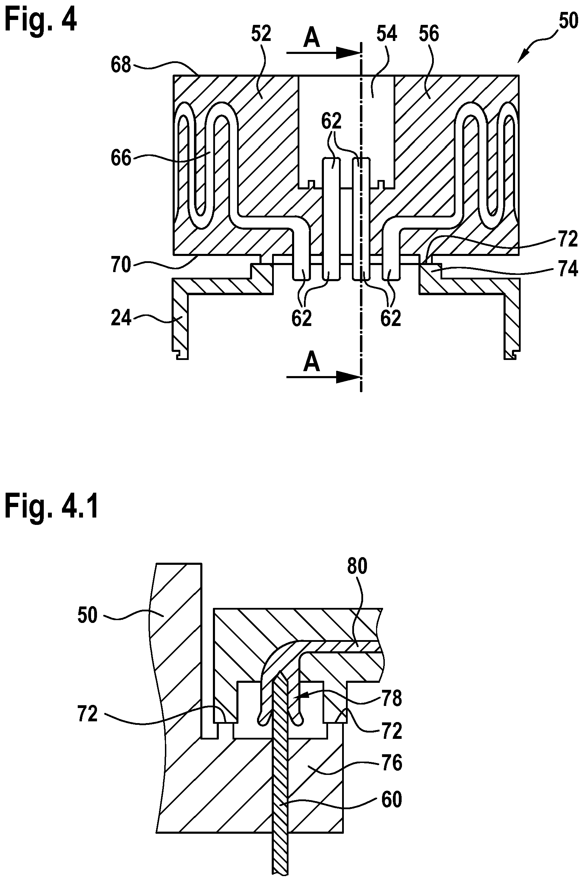

Der Darstellung gemäß Figur 4 ist die Fügestelle zwischen dem Trägerkörper und dem Heiztopf des erfindungsgemäß vorgeschlagenen Versorgungsmoduls 10 zu entnehmen.

In der schematischen Darstellung gemäß Figur 4 ist erkennbar, dass sich das Heizelement 66, als Stanzgitter, als Heizdraht oder als Folie ausgeführt, in Form des Mäanders 64 durch das Wandmaterial 56 der Topfwand 52 des Heiztopfes 50 erstreckt. Die Enden des Heizelementes 66 stellen die elektrischen Kontakte 62 der Hauptheizung 18 des Versorgungsmoduls 10 dar. Des Weiteren befinden sich in der Topfwand 52, bzw. in deren Wandmaterial 56 die elektrischen Kontakte 60 der Zusatzheizung 30. Diese münden einerseits innerhalb der Einbuchtung 54 und bilden dort einen Kontaktbereich 78 zur elektrischen Kontaktierung; andererseits erstrecken sich die elektrischen Kontakte 60 der Zusatzheizung 30 über den zweiten Rand 70 der Topfwand 52 des Heiztopfes 50 hinaus. Die elektrischen Kontakte 60, 62 für die Hauptheizung 18 und die Zusatzheizung 30 stehen demnach - wie auch in Figur 3 dargestellt - über den zweiten Rand 70, d.h. die Unterseite der Topfwand 52 des Heiztopfes 50 vor. An der Unterseite des Heiztopfes 50 und der Oberseite des Trägerkörpers 24 des erfindungsgemäß vorgeschlagenen Versorgungsmoduls 10 befinden sich beispielsweise jeweils als Bund 74 ausgeführte Vorsprünge. An den einander kontaktierenden Bünden 74, die an der Unterseite des Heiztopfes 50 bzw. der Oberseite des Trägerkörpers 24 ausgebildet sind, wird eine stoffschlüssige Fügestelle 72 ausgeführt. Diese übernimmt die Abdichtung sämtlicher elektrischer Kontakte 60, 62, die über den zweiten Rand 70 des Heiztopfes 50 hervorstehen. Bei der stoffschlüssigen Fügestelle 72 handelt es sich insbesondere um eine Heizelementschweißung. Durch die Ausbildung einer stoffschlüssigen Fügestelle 72 zwischen dem Heiztopf 50 und dem Trägerkörper 24 des Versorgungsmodules 10, kann eine robuste Abdichtstelle geschaffen werden, die ohne den Einsatz von zusätzlichen Befestigungsbauteilen, wie beispielsweise die in Figur 2 dargestellten Kleinteile Hülse 34, O-Ringe 36 aus Elastomer, Scheibe 38 sowie Stützkörper 40 auskommt. Dies erlaubt einerseits den Entfall von Bauteilen, so dass eine Kostenreduzierung erreicht werden kann, andererseits kann durch den Verzicht auf die oben genannten Bauteile eine erhebliche Reduktion der erforderlichen Montageschritte erreicht werden.

Der Detaildarstellung gemäß Figur 4.1 ist zu entnehmen, dass innerhalb des Kontaktbereiches 78 ein Leiter 80 und das obere Ende des elektrischen Kontaktes 60 für die Zusatzheizung 30 miteinander elektrisch kontaktiert sind. Figur 4.1 zeigt des Weiteren, dass das Material des elektrischen Kontaktes 60 für die Zusatzheizung 30 sich vollständig durch das Material der Kunststoff-Isolierung 76 erstreckt. Eine Abdichtung der in Figur 4.1 dargestellten elektrischen Kontaktierung erfolgt ebenfalls durch eine stoffschlüssig ausgebildete Fügestelle 72 zwischen einem Bund, der am Heiztopf 50 einerseits ausgebildet ist und einer Isolierung. Damit ist auch gemäß der Darstellung in Figur 4.1 der Kontaktbereich 78 gegen das sich außerhalb des Versorgungsmoduls 10 befindende, in einem hier nicht näher dargestellten Vorratstank aufgenommene aggressive Eigenschaften aufweisende gefrierfähige Reduktionsmedium abgedichtet, ohne dass Elastomerringe und zur Befestigung dienende Kleinteile erforderlich wären. Das erfindungsgemäß vorgeschlagene Versorgungsmodul 10 eignet sich insbesondere zum Einsatz in einem Abgasnachbehandlungssystem, bei dem ein Reduktionsmittel, insbesondere eine gefrierfähige Reduktionsmittellösung wie Harnstoff oder eine Harnstoff-Wasser-Lösung über ein Dosiermodul, welches von dem erfindungsgemäß vorgeschlagenen Versorgungsmodul 10 versorgt wird, in den Abgastrakt einer selbstzündenden Verbrennungskraftmaschine eingespritzt wird. Das erfindungsgemäß vorgeschlagene Versorgungsmodul 10 befindet sich bevorzugt an der Unterseite des den gefrierfähigen Betriebs-/Hilfsstoff bevorratenden Vorratstanks.

In Bezug auf die Hauptheizung 18 sei angemerkt, dass bei der Ausbildung des in die Topfwand 52 eingebetteten Heizelementes 66 - insbesondere bei der Ausbildung des Heizelementes 66 als Stanzgitter - vorteilhafter Weise unterschiedliche Temperaturausdehnungen des Stanzgitters und der Kunststoff-Isolierung, d.h. des Wandmaterials 56 kompensiert werden können. Wird insbesondere das als Stanzgitter ausgebildete Heizelement vertikal ausgeführt, so dass die längsten Teilstücke des Stanzgitters sich in vertikale Richtung erstrecken, kann bei Temperaturdehnung des Heiztopfes in Umfangsrichtung ein Ziehharmonikaeffekt des Stanzgitters in Richtung der größten Temperaturausdehnung des Kunststoffs, d.h. in Umfangsrichtung erzielt werden. Folglich sind entstehende Spannungen auf die Kunststoffumspritzung, d.h. auf die Topfwand 52 des Heiztopfes 50 dementsprechend gering und liegen insbesondere unterhalb zulässiger Maximalspannungswerte.

Außer den zeichnerisch dargestellten Heizelementen 66 besteht die Möglichkeit für die Hauptheizung 18 umlaufende Heizelemente im Heiztopf 50 einzusetzen. Dazu zählt das mehrfach erwähnte Stanzgitter; ferner können Heizdrähte, Heizmatten bzw. Heizfolien eingesetzt werden; ferner Wasserheizungen, wobei ein in das Wandmaterial 56 eingelassenes Stanzgitter durch einen Kanal ersetzt wird, der mit einem Flüssigkeitskreislauf verbindbar ist. Anstelle der umlaufenden Heizelemente 66 besteht die Möglichkeit, lokal positionierte Heizelemente mit einem zusätzlichen Wärmeleitkörper, der insbesondere aus einem metallischen Material gefertigt ist, einzusetzen. Dazu sind Heizwiderstände ebenso zu zählen wie PTEC-Elemente, die in Abständen voneinander entlang der Topfwand 52 des Heiztopfes 50 des Versorgungsmoduls 10 angeordnet sein können.

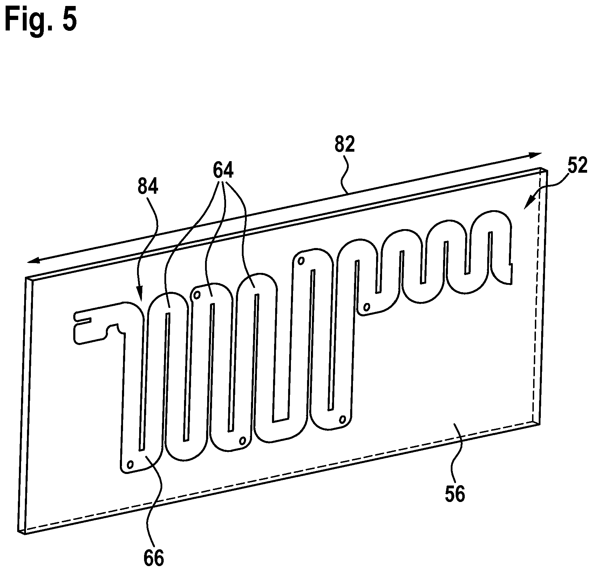

Figur 5 zeigt eine in eine Topfwand eingebettetes Heizelement.

Bei dem in Figur 5 dargestellten Heizelements 66 handelt es sich um ein Stanzgitter, welches in das Wandmaterial 56 des Heiztopfes 50 eingebettet ist. Das als Stanzgitter ausgeführte Heizelement 66 ist in vertikaler Einbauposition 84 in das Wandmaterial 56 eingelassen. Mit Position 82 ist eine Richtung der höchsten Temperaturdehnung des Wandmaterials 56 bezeichnet. Die Richtung der höchsten Temperaturdehnung 82 fällt mit der geringsten Steifigkeit des als Stanzgitter ausgeführten Heizelementes 66 zusammen, so dass sich dieses in Mäanderform 64 ausgeführte Heizelement 66 nach Art einer Ziehharmonika bei entsprechender Dehnung des Wandmaterials 56 bewegt. Das als Stanzgitter ausgeführte Heizelement 66 wird hinsichtlich seiner Breite, seiner Dicke, seiner Länge der einzelnen Bahnen so ausgelegt, dass entstehende Spannungen im Wandmaterial 56, d.h. entsprechende Temperaturdehnungen viel kleiner sind als die zulässige Spannung des Wandmaterials 56. Der sich einstellende Ziehharmonikaeffekt ermöglicht eine materialschonende Kompensation von Temperaturdehnungen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Versorgungsmodul (10) zur Förderung eines gefrierfähigen Betriebs-/Hilfsstoffes zur Abgasnachbehandlung einer Verbrennungskraftmaschine und zur Beheizung eines den gefrierfähigen Betriebs-/Hilfsstoff aufnehmenden Vorratstanks, mit einer Hauptheizung (18) und einer Zusatzheizung (30), die an einem Trägerkörper (24) elektrisch kontaktiert sind, **dadurch gekennzeichnet, dass** eine Topfwand (52) eines Heiztopfes (50) sowohl elektrische Kontakte (62) der Hauptheizung (18) als auch elektrische Kontakte (60) der Zusatzheizung (30) umfasst, wobei sowohl die Hauptheizung (18) als auch die Zusatzheizung (30) des Versorgungsmodules (10) mit einheitlichen elektrischen Kontakten (60, 62) für beide Heizungen (18, 30) ausgeführt sind.

2. Versorgungsmodul gemäß Anspruch 1, **dadurch gekennzeichnet, dass** die elektrischen Kontakte (60, 62) in einer Einbuchtung (54) der Topfwand (52) liegen.

3. Versorgungsmodul gemäß Anspruch 1, **dadurch gekennzeichnet, dass** die elektrischen Kontakte (62) der Hauptheizung (18) an der dem Trägerkörper (24) zugewandten Seite der Topfwand (52) kontaktierbar sind.

4. Versorgungsmodul gemäß Anspruch 1, **dadurch gekennzeichnet, dass** die elektrischen Kontakte (60) der Zusatzheizung (30) von beiden Seiten der Topfwand (52) kontaktierbar sind.

5. Versorgungsmodul gemäß Anspruch 1, **dadurch gekennzeichnet, dass** die elektrischen Kontakte (60) der Zusatzheizung (30) von einer tankseitigen Seite stoffschlüssig verschlossen sind, sofern am Versorgungsmodul keine Zusatzheizung (30) benötigt wird.

6. Versorgungsmodul gemäß Anspruch 1, **dadurch gekennzeichnet, dass** die elektrischen Kontakte (60) der Zusatzheizung (30) durch das Wandmaterial (56) des Heiztopfes (50) geführt sind und sich in die Einbuchtung (54) der Topfwand (52), einen Kontaktbereich (78) bildend, erstrecken.

7. Versorgungsmodul gemäß Anspruch 1, **dadurch gekennzeichnet, dass** die elektrischen Kontakte (60) der Zusatzheizung (30) und die elektrischen Kontakte (62) der Hauptheizung (18) elastomerfrei abgedichtet sind.

8. Versorgungsmodul gemäß Anspruch 1, **dadurch gekennzeichnet, dass** eine Abdichtung der elektrischen Kontakte (60) der Zusatzheizung (30) und der elektrischen Kontakte (62) der Hauptheizung (18) durch eine stoffschlüssige Fügestelle (72) zwischen dem Trägerkörper (24) und dem Heiztopf (50) gegeben ist.

9. Versorgungsmodul gemäß Anspruch 1, **dadurch gekennzeichnet, dass** eine Abdichtung der elektrischen Kontakte (60) der Zusatzheizung (30) durch eine stoffschlüssige Fügestelle (72) zwischen dem Heiztopf (50) und einer Kunststoff-Isolierung (76) gegeben ist.

10. Versorgungsmodul gemäß Anspruch 1, **dadurch gekennzeichnet, dass** die Topfwand (52) ein in Mäanderform (64) verlaufendes Heizelement (66) umfasst, welches als Stanzgitter, drahtförmig oder als Folie ausgeführt ist.

11. Versorgungsmodul gemäß Anspruch 1, **dadurch gekennzeichnet, dass** die Hauptheizung (18) topfförmig ausgebildet ist und ein Heizelement (66) aufweist, welches eine Temperaturdehnungskompensation ermöglicht.

12. Versorgungsmodul gemäß Anspruch 1, **dadurch gekennzeichnet, dass** die Hauptheizung (18) mit einem wärmeleitenden, elektrisch isolierenden Kunststoff gefertigt ist, dem mineralische und/oder keramische Füllstoffe beigemischt sind.

13. Versorgungsmodul gemäß Anspruch 1 und Steuergerät, **dadurch gekennzeichnet, dass** das Steuergerät derart konfiguriert ist, dass eine Gesamtheizleistung zwischen der Hauptheizung (18) und der Zusatzheizung (30) durch das Steuergerät flexibel aufgeteilt wird.

14. Verwendung des Versorgungsmoduls (10) gemäß einem der Ansprüche 1 bis 13 in einem Abgasnachbehandlungssystem einer Verbrennungskraftmaschine.

## Claims

1. Supply module (10) for conveying a freezing-capable operating/auxiliary agent for the exhaust gas post-treatment of an internal combustion engine and for heating a storage tank that receives the freezing-capable operating/auxiliary agent, having a main heater (18) and an auxiliary heater (30) which are electrically contacted on a support member (24), **characterized in that** a pot wall (52) of a heater pot (50) comprises both electrical contacts (62) of the main heater (18) as well as electrical contacts (60) of the auxiliary heater (30), wherein both the main heater (18) and the auxiliary heater (30) of the supply module (10) are realized with uniform electrical contacts (60, 62) for both heaters (18, 30) .

2. Supply module according to Claim 1, **characterized in that** the electrical contacts (60, 62) lie in a concavity (54) of the pot wall (52).

3. Supply module according to Claim 1, **characterized in that** the electrical contacts (62) of the main heater (18) are contactable on that side of the pot wall (52) that faces the support member (24).

4. Supply module according to Claim 1, **characterized in that** the electrical contacts (60) of the auxiliary heater (30) are contactable from both sides of the pot wall (52).

5. Supply module according to Claim 1, **characterized in that** the electrical contacts (60) of the auxiliary heater (30) are closed in a materially integral manner from a tank-proximate side, in as far as no auxiliary heater (30) is required on the supply module.

6. Supply module according to Claim 1, **characterized in that** the electrical contacts (60) of the auxiliary heater (30) are routed through the wall material (56) of the heater pot (50) and extend into the concavity (54) of the pot wall (52) while forming a contact region (78).

7. Supply module according to Claim 1, **characterized in that** the electrical contacts (60) of the auxiliary heater (30) and the electrical contacts (62) of the main heater (18) are sealed in an elastomer-free manner.

8. Supply module according to Claim 1, **characterized in that** sealing of the electrical contacts (60) of the auxiliary heater (30) and of the electrical contacts (62) of the main heater (18) is provided by a materially integral joint (72) between the support member (24) and the heater pot (50).

9. Supply module according to Claim 1, **characterized in that** sealing of the electrical contacts (60) of the auxiliary heater (30) is provided by a materially integral joint (72) between the heater pot (50) and a plastics insulation (76).

10. Supply module according to Claim 1, **characterized in that** the pot wall (52) comprises a heater element (66) that runs in a meandering shape (64) and which is embodied as a pressed screen, in the form of a wire, or as a foil.

11. Supply module according to Claim 1, **characterized in that** the main heater (18) is configured so as to be pot-shaped and has a heater element (66) which enables a compensation for thermal expansion.

12. Supply module according to Claim 1, **characterized in that** the main heater (18) is made with a heat-conducting, electrically isolating plastic to which mineral and/or ceramic fillers are added.

13. Supply module according to Claim 1 and controller, **characterized in that** the controller is configured in such a way that a total heater output by the controller is flexibly split between the main heater (18) and the auxiliary heater (30).

14. Use of the supply module (10) according to one of Claims 1 to 13 in an exhaust gas post-treatment system of an internal combustion engine.

## Revendications

1. Module d'alimentation (10) destiné au transport d'un fluide de fonctionnement/auxiliaire congelable aux fins de post-traitement des gaz d'échappement d'un moteur à combustion interne, et au chauffage d'un réservoir de stockage abritant le fluide de fonctionnement/auxiliaire congelable, comprenant un chauffage principal (18) et un chauffage auxiliaire (30) qui sont mis en contact électrique sur un corps de support (24), **caractérisé en ce qu'**une paroi de pot (52) d'un pot chauffant (50) comprend à la fois des contacts électriques (62) du chauffage principal (18) et des contacts électriques (60) du chauffage auxiliaire (30), dans lequel le chauffage principal (18) et le chauffage auxiliaire (30) du module d'alimentation (10) sont tous deux réalisés de manière à comporter des contacts électriques unitaires (60, 62) pour les deux chauffages (18, 30).

2. Module d'alimentation selon la revendication 1, **caractérisé en ce que** les contacts électriques (60, 62) se trouvent dans un renfoncement (54) de la paroi de pot (52) .

3. Module d'alimentation selon la revendication 1, **caractérisé en ce que** les contacts électriques (62) du chauffage principal (18) peuvent être mis en contact avec le côté de la paroi de pot (52) qui est en regard du corps de support (24).

4. Module d'alimentation selon la revendication 1, **caractérisé en ce que** les contacts électriques (60) du chauffage auxiliaire (30) peuvent être mis en contact des deux côtés de la paroi de pot (52).

5. Module d'alimentation selon la revendication 1, **caractérisé en ce que** les contacts électriques (60) du chauffage auxiliaire (30) sont scellés par complémentarité de matériau par une face côté réservoir lorsqu'aucun chauffage auxiliaire (30) n'est nécessaire pour le module d'alimentation.

6. Module d'alimentation selon la revendication 1, **caractérisé en ce que** les contacts électriques (60) du chauffage auxiliaire (30) sont guidés à travers le matériau de paroi (56) du pot chauffant (50) et s'étendent dans le renfoncement (54) de la paroi de pot (52) en formant une zone de contact (78).

7. Module d'alimentation selon la revendication 1, **caractérisé en ce que** les contacts électriques (60) du chauffage auxiliaire (30) et les contacts électriques (62) du chauffage principal (18) sont étanchéifiés sans élastomère.

8. Module d'alimentation selon la revendication 1, **caractérisé en ce qu'**une étanchéité des contacts électriques (60) du chauffage auxiliaire (30) et des contacts électriques (62) du chauffage principal (18) est assurée par un joint à complémentarité de matériau (72) entre le corps de support (24) et le pot chauffant (50).

9. Module d'alimentation selon la revendication 1, **caractérisé en ce qu'**une étanchéité des contacts électriques (60) du chauffage auxiliaire (30) est assurée par un joint à complémentarité de matériau (72) entre la pot chauffant (50) et une isolation en matière plastique (76) .

10. Module d'alimentation selon la revendication 1, **caractérisé en ce que** la paroi de pot (52) comprend un élément chauffant (66) qui s'étend en forme de méandre (64) et est réalisé sous forme de grille perforée, sous forme de fil ou sous forme de feuille.

11. Module d'alimentation selon la revendication 1, **caractérisé en ce que** le chauffage principal (18) est réalisé sous forme de pot et comporte un élément chauffant (66) qui permet une compensation de la dilatation thermique.

12. Module d'alimentation selon la revendication 1, **caractérisé en ce que** le chauffage principal (18) est fabriqué en matière plastique électriquement isolante et thermiquement conductrice, à laquelle des charges minérales et/ou céramiques sont mélangées.

13. Module d'alimentation selon la revendication 1 et appareil de commande, **caractérisés en ce que** l'appareil de commande est configuré de telle sorte qu'une puissance de chauffage totale soit répartie de manière flexible par l'appareil de commande entre le chauffage principal (18) et le chauffage auxiliaire (30).

14. Utilisation du module d'alimentation (10) selon l'une des revendications 1 à 13 dans un système de post-traitement des gaz d'échappement d'un moteur à combustion interne.
